# EUROPÄISCHE PATENTSCHRIFT

(11) **EP 0 559 184 B1**
(45) Veröffentlichungstag und Bekanntmachung des Hinweises auf die Patenterteilung: **01.12.1999**
(21) Anmeldenummer: 93103420.1
(22) Anmeldetag: 03.03.1993
(51) Int. Cl.: H02J 13/00

(54) **Vorrichtung zur Steuerung des Stromverbrauchs**
Apparatus for the control of power consumption
Appareil de contrôle de la consommation de courant

(30) Priorität: 03.03.1992 FI 920947
(43) Veröffentlichungstag der Anmeldung: 08.09.1993
(73) Patentinhaber: Deutsche Zähler-Gesellschaft Nachf. A. Stepper & Co (GmbH & Co.), 22083 Hamburg (DE)
(72) Erfinder: Kaub, Werner, SF-0871 Virkkala (FI)
(74) Vertreter: Richter, Werdermann & Gerbaulet

(56) Entgegenhaltungen:
- FR-A- 2 624 627
- GB-A- 2 125 595
- US-A- 4 803 632
- ABB REVIEW Nr. 7 , August 1992 , ZüRICH Seiten 39 - 45 XP311820 DOBBERSTEIN ET AL 'multifunctional receiver technology for efficient load management with s.p.i.d.e.r. lms'
- ELEKTROTECHNISCHE ZEITSCHRIFT Bd. 109, Nr. 5 , März 1988 , BERLIN Seiten 216 - 219 STÖCKLE 'digitale filter in der rundsteuertechnik'

## Beschreibung

Die vorliegende Erfindung betrifft eine den Stromverbrauch steuernde Vorrichtung zur Steuerung des Betriebs der über sie ans Stromversorgungsnetz angeschlossenen Last, welche Vorrichtung als Rundsteuerempfänger funktioniert und an die Netzspannung angeschlossene Elemente zum Erkennen des über das Stromversorgungsnetz kommenden, vom Rundsteuersender gesendeten Steuersignals sowie an diese Erkennungselemente angeschlossene Auswertungselemente zur Bewertung des Informationsgehaltes des erkannten Signals und zur auf dieser Bewertung basierenden Laststeuerung durch Betätigung eines Schaltelements umfasst.

Der Stromverbrauch des Verbrauchers kann durch eine Schaltuhr gesteuert werden, die den Strom zu bestimmten Tages- bzw. Nachtzeiten und an den gewünschten Wochentagen ein- und ausschaltet. Eine solche Schaltuhr ist beispielsweise aus der FR-A-2624627 bekannt und kann gewöhnlich manuell programmiert werden, so dass das Energiewerk die Zeitpunkte des Ein- und Ausschaltens an der Schaltuhr einstellen kann. Auf diese Weise können zum Beispiel die elektrische Gebäudeheizung, die Straßenbeleuchtung, die Steckdosen für Kfz-Standheizung usw. gesteuert werden. Die Uhr kann gestellt werden, so dass sie vom Energiewerk von Sommer- auf Winterzeit und umgekehrt umgestellt werden kann. Der Einsatz solcher Schaltuhren gestaltet sich jedoch ziemlich schwierig, da bei ihnen die Stromein- und -ausschaltzeitpunkte sowie die Uhrzeit von Hand eingestellt werden müssen. Besonders bei Beleuchtungsanlagen ist der Einsatz der manuell zu programmierenden Schaltuhr schwierig, da sich die Tageslänge im Wandel der Jahreszeiten ständig ändert und die Schaltuhr lediglich ein Tages-/Wochenprogramm hat. Außerdem muss die Uhr vor Ort jeweils auf Sommer- bzw. Winterzeit umgestellt werden. Oft kann mit der Schaltuhr nur ein Verbraucher gesteuert werden, so dass für die verschiedenen Verbraucher (Beleuchtung, Kfz-Standheizung u. dgl.) jeweils separate Schaltuhren erforderlich sind. Auch ist der Ein/Ausschaltabstand der Schaltuhr nicht kurz genug. Bei 24-Stunden Betrieb können die Schaltvorgänge der Schaltuhr oft auf 5 Minuten genau, bei Wochenbetrieb jedoch gewöhnlich nur auf 30 Minuten genau eingestellt werden. Zum Beispiel bei Beleuchtungsanlagen sind jedoch 30 Minuten auf keinen Fall ein ausreichend kleiner Schaltabstand. Somit ist die Steuerung des Stromverbrauchs mittels Schaltuhr alles andere als benutzerfreundlich, und mit der einzelnen Schaltuhr kann auch nur ein einziges Objekt gesteuert werden.

Große Elektrizitätswerke verfügen heute über Laststeuersysteme, von denen die Rundsteuersysteme zu den verbreitesten gehören. Gegenwärtig benutzen ca. 50 % der Energiewerke ein Rundsteuersystem und ca. 50 % arbeiten mit Schaltuhren. Die Rundsteuervorrichtungen eignen sich zur Überwachung und Begrenzung der Leistungsspitze von Verbrauchern (Industrie/Haushalte), zur Steuerung von Zweitarifzählern, zur Steuerung verschiedener Verbraucher (z.B. Straßenbeleuchtung), zur Laststeuerung (z.B. Abschaltzeit der elektrischen Heizung) sowie zur Übermittlung von Alarmmeldungen.

Beim Rundsteuersystem erfolgt die Datenübertragung nur in einer Richtung, das heißt eine Datenübertragung vom Steuerobjekt zurück ist nicht möglich. Bei der Rundsteuerung, wie beispielsweise aus der GB-A-2 125 595 bekannt, dient als Übertragungsweg der Steuersignale vom Sender zum Empfänger das Stromversorgungsnetz, und zwar deshalb, weil es sowieso im Besitz der Elektrizitätswerke steht und somit keine zusätzlichen Investitionen für die Datenübertragungsverbindungen zwischen den Sendern (Unterstationen) und den Empfängern erforderlich sind. Außerdem sind diese Datenübertragungsverbindungen dann unabhängig von der Tätigkeit und Geschäftspolitik anderer Institutionen wie zum Beispiel Telefongesellschaften (wenn man zur Übertragung das Fernsprechnetz verwendete). Weitere mit der Datenübertragung über das Stromversorgungsnetz verbundene Vorteile sind, dass sich dieses Netz bis zu jeder zu messenden bzw. zu steuernden Stelle erstreckt, dass es rund um die Uhr verfügbar ist, und dass es sich zur Übertragung von Gruppensignalen eignet. Beschränkungen wiederum ergeben sich daraus, dass infolge der Veränderungen der Netz-Schaltzustände nicht einfach mit bidirektionaler Datenübertragung gearbeitet werden kann, und daraus, dass das Netz in seinen Übertragungseigenschaften nicht im Hinblick auf Frequenzen über 50 bzw. 60 Hz ausgelegt ist. Das größte Problem bei der Verwendung des Stromversorgungsnetzes als Datenübertragungsweg liegt in dem niedrigen Impedanzpegel des Netzes. In der Praxis wird die Rundsteuervorrichtung entweder über Transformatoren oder über Kondensatoren ans Stromversorgungsnetz geschaltet. Die Kondensatoren haben hohe Impedanzen, welche induktiv kompensiert werden muss. Besonders die Verteilertransformatoren und die Mittelspannungsleitungen schwächen das Signal, und Kompensationskondensatoren ohne Sperrdrosseln (Reihenwiderstände) schließen es kurz. Die Verteilertransformatoren verursachen Probleme, da ihre Parallelresonanz um die Mitte des Übertragungsfrequenzabstands fällt. Außerdem breiten sich, netzstrukturbedingt, die Signale über das gesamte Netz aus, so dass das an einem bestimmten Punkt eintreffende Signal sehr schwach ist. Probleme verursachen weiter die 50 Hz ungeraden Oberschwingungen sowie die Einflüsse anderer Störsignale.

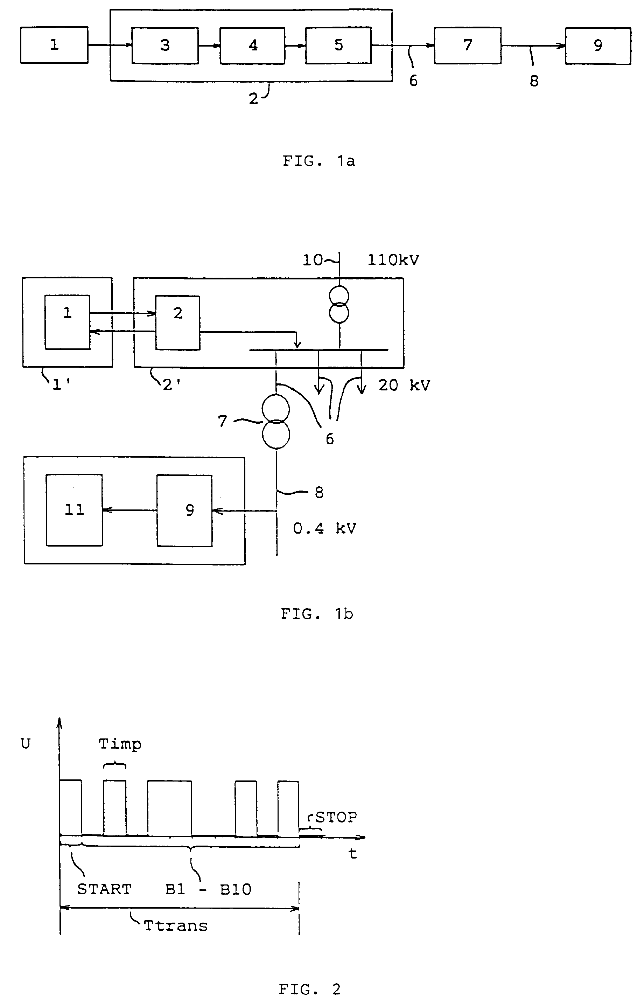

Beim Rundsteuersystem werden über eine oder mehrere Einspeiseanlagen niederfrequente (tonfrequente, 110,...2000 Hz) Impulse durch das Stromversorgungsnetz an die Empfänger gesendet, die sich in der Regel im Niederspannungsnetz befinden. Bei den Steuerbefehlen handelt es sich also um Impulse, die auf die 50Hz- bzw. 60Hz-Spannung summiert werden. Die Steuerimpulse können in jedem beliebigen Netzteil empfangen und decodiert werden. Die Steuerimpuls-Eingabevorrichtungen 2, das heißt die Sender 2, die oft in den Unterstationen 2' angeordnet sind und zum Beispiel eine Steuereinheit 3, einen Frequenzumformer 4 und einen Resonanzkreis 5 enthalten, werden von der Zentralanlage 1 (die gewöhnlich in der Schaltwarte 1' angeordnet ist) gesteuert, bei der sich das Zeitprogramm gewöhnlich problemlos verändern lässt. Die Sender 2 der Rundsteueranlagen können im Prinzip in jeder beliebigen Spannungsstufe angeordnet werden, jedoch werden sie gewöhnlich ans Mittelspannungsnetz 6 geschaltet. Die Steuerimpulse werden über den Resonanzkreis 5 in das Mittelspannungsnetz 6 eingespeist. Die Steuerimpulse wandern vom Mittelspannungsnetz 6 über den Verteilertransformator 7 ins Niederspannungsnetz 8 und vom Niederspannungsnetz 8 zum Empfänger 9 des Verbrauchers. In den Figuren 1a und 1b ist der Aufbau des Rundsteuersystems im Prinzip dargestellt. Der Sender hat im typischen Falle eine Leistung von 25 bis 450 kW und wird über 20kV-Schaltvorrichtungen ans Mittelspannungsnetz geschaltet. Die Steuerimpulse wandern als Impulstelegramm über das Stromversorgungsnetz gleichzeitig zu allen von der betreffenden Station 2' gespeisten Empfängern 9, welche die in den von ihnen empfangenen und akzeptierten Impulsen enthaltenen Befehle verwirklichen und so die gewünschte Last 11 steuern. Die Steuerautomatik 1 (Zentralanlage 1) bildet ein einem bestimmten Steuerbefehl entsprechendes Bitbild und speist dieses in den Sender 2 ein, der es in die gewünschte Steuerfrequenz umwandelt. Ins Netz eingespeist wird das Signal über den Schaltkreis 5, und empfangen werden kann es aus dem Netz mit dem Empfänger 9, der das Signal decodiert und die gewünschten Schaltvorgänge auslöst. Die Länge des Steuertelegramms variiert je nach Fabrikat des Rundsteuersystems von ca. 6 Sekunden bis hin zu 300 Sekunden. Figur 2 zeigt einen Steuerbefehl als Beispiel. Der Steuerbefehl kann also aus einem Anfangsimpuls START, der das System aktiviert und die Synchronisation von Sender und Empfänger für die kommende Codefolge sicherstellt, einem mehrere Bits B1-B10 umfassenden eigentlichen Steuertelegramm sowie einem Stop-Bit STOP, während dem der Sender und die Empfänger in Wartezustand gehen und das System somit zum Senden des folgenden Befehls bereit ist, bestehen. Der Steuerbefehl besteht aus dem Start-Bit START und den Befehlsbits B1-B10, und seine Dauer Ttrans ist abhängig von der Länge Timp der einzelnen Impulse und von der Bit-Anzahl. Die (dreiphasige) Einspeisung der Impulse ins Netz kann über Serien- oder über Parallelanschluß erfolgen. Reihenanschluß benutzt man bei niedrigen Sendefrequenzen (f < 300 Hz), da die höheren Frequenzen im 110kV-Hintergrundnetz (Hochspannungsnetz, Bezugszahl 10 in Fig. 1b) zu große Spannungs- und Leistungsverluste bewirken würden. Parallelanschluß verwendet man bei höheren Sendefrequenzen (170 Hz < f < 2000 Hz) und setzt die Verwendung eines Schalters oder eines Leistungstrenners mit kapazitivem Stromunterbrechungsvermögen voraus. Am häufigsten arbeitet man mit Paralleleinspeisung, wobei die Amplitude der einzuspeisenden Impulse ca. 0,5 bis 5,0 % der Amplitude der Spannung des zu steuernden Netzes beträgt. Als Problem treten beim niederfrequenten Rundsteuersystem die Baugröße der Sendevorrichtungen und damit deren Platzbedarf und Herstellungskosten in Erscheinung. Als Vorteil eines solchen Systems sind die relativ billigen Empfänger und außerdem seine Betriebssicherheit zu nennen.

Das Rundsteuersystem bietet also gegenüber der Schaltuhr zahlreiche Vorteile, da mit ihm mehrere Funktionen ausgeführt werden können, deren Anzahl von den einzusetzenden Empfängern bestimmt wird. Es gibt Empfänger, mit denen mehrere Lasten, das heißt mehrere Schalter gesteuert werden können. Die Empfänger haben dann gewöhnlich einen Speicher, der so programmiert werden kann, daß der Empfänger bei bestimmten vom Sender gesendeten Steuerbefehlen bestimmte Funktionen ausführt. So können zum Beispiel in den Schalterstellungswechsel Schaltverzögerungen zur Verhinderung von Überspannungen bei Schalten von Lastgruppen sowie eine Zeitablauffunktion einprogrammiert werden, wobei bei letzterer der Empfänger bei Empfang des Steuerbefehls die Schalterstellung wechselt und nach Ablauf der gewünschten Zeit auf die ursprüngliche Stellung zurückschaltet. Das Rundsteuersystem hat den Nachteil, daß seine Anschaffung hohe Investitionen erfordert, und deshalb noch nicht alle - vor allem kleine - Elektrizitätswerke über ein solches System verfügen.

Aufgabe der vorliegenden Erfindung ist es, eine Vorrichtung zu schaffen, die gleichzeitig sowohl als Empfänger eines Rundsteuersystems wie auch als autonome Steuervorrichtung in der Weise zu funktionieren vermag, daß sie auf Grund von Vorprogrammierung das Schalten mehrerer Lasten zu im voraus festgelegten Zeitpunkten selbständig steuert und durchführt.

Für die vorliegende Erfindung ist charakteristisch, daß sie außerdem als autonome Schaltuhr funktioniert und eine Uhr sowie Speicherelemente, in die mit einem für die Dauer des Eingebens angeschlossenen Computer Befehle einprogrammiert werden können, sowie mit diesen Speicherelementen verbundene Auswertungselemente zur Bewertung des Informationsgehalts der Speicherelemente und zur Laststeuerung auf Grund dieser Bewertung durch Betätigung eines Schaltelements umfaßt.

Die erfindungsgemäße Vorrichtung ist intelligent und vermag somit auch Steuerungen durchzuführen, die früher lediglich durch Rundsteuersysteme zu bewerkstelligen waren. Die Vorrichtung kann als Schaltuhr für Tarifsteuerung, als Rundsteuerempfänger oder als selbständige Steuervorrichtung eingesetzt werden. Mit der Vorrichtung lassen sich gleichartige Funktionen wie mit dem Rundsteuersystem ausführen, das heißt Messung und Begrenzung von Leistungsspitzen, Steuerung von Zweitarifzählern, Steuerung verschiedener Verbraucher (z. B. Straßenbeleuchtung) und Steuerung von Lasten (z.B. elektrische Heizung, Wasserpumpe).

Funktioniert die Vorrichtung als Schaltuhr zur Tarifsteuerung, so bedeutet dies, daß sie aus einer Echtzeituhr besteht, die bevorzugt in den die Vorrichtung steuernden Mikroprozessor integriert und so programmierbar ist, daß sie die Funktionen mehrerer Schaltuhren ausführt, das heißt mehrere Schalter (Relais) steuert. Die Uhrzeit ist auf eine Sekunde genau programmierbar, und die verschiedenen Funktionen, wie z.B. Schaltverzögerung, Ablaufzeit usw., können auf eine Sekunde genau programmiert werden, während die Schaltuhrfunktion (Ein- und Ausschaltzeiten) auf eine Minute genau programmierbar ist. Nach einer durch Überschreiten der Leistungsspitze bedingten Stromunterbrechung wird nach einer gewissen Zeit das Netz wieder unter Strom gesetzt. Die erfindungsgemäße Vorrichtung kann im Hinblick auf solche Stromausfälle so programmiert werden, daß sie den Strom für die verschiedenen Lasten mit verschieden langen Verzögerungen (z.B. elektrische Heizung 5 min, Wasserpumpe 10 min) wieder einschaltet, so daß nach dem Stromausfall nicht sofort eine große Last am Netz hängt. Außerdem können in die Vorrichtung komplette Jahresprogramme einprogrammiert werden, so daß sich Sommer- und Winterzeit sowie die mit den verschiedenen Jahreszeiten verbundenen Bedürfnisse bereits im voraus berücksichtigen lassen. Diese Möglichkeit des Eingebens von Jahresprogrammen bedeutet einen großen Vorteil gegenüber der Programmierung der dem Stand der Technik entsprechenden Schaltuhr, in die höchstens ein Wochenprogramm eingegeben werden kann, so daß im Laufe des Jahres oft mehrmalige Programmänderungen erforderlich sind. Die erfindungsgemäße Vorrichtung ist eine autonome Steuervorrichtung, so daß sie die vorgenannten Funktionen auf Grund von Vorprogrammierung selbständig, ohne über das Netz eingehenden Steuerbefehl auszuführen in der Lage ist. Andererseits kann die Vorrichtung die besagten Funktionen aber auch auf Grund von Befehlen, die ihr über das Stromversorgungsnetz zugehen, ausführen, das heißt sie kann als Rundsteuerempfänger eingesetzt werden.

In die Vorrichtung werden vor ihrer Installation bei einem bestimmten Verbraucher (Industrie/Haushalte) die gewünschten Funktionen vorprogrammiert. Dieses Programmieren geschieht mit Computer und einem speziellen Programm, das bei der Eingabe der Daten als Interface der Vorrichtung dient. Der Betreiber - gewöhnlich das Elektrizitätswerk - kann mit dem Computerprogramm die Verbraucher-Steuerungen programmieren, die über Computer in die erfindungsgemäße Vorrichtung (in deren Speicher) eingegeben werden. Zum Programmierungszeitpunkt ist der Computer z.B. über Kabel mit der Vorrichtung verbunden. Nach erfolgter Programmierung wird die Vorrichtung zum Verbraucher gebracht, wo sie entweder direkt oder über andere Vorrichtungen, wie z.B. kWh-Zähler, ans Stromversorgungsnetz angeschlossen wird. Die Vorrichtung ist nun betriebsbereit. Natürlich kann die Vorrichtung auch erneut programmiert werden, und eine Programmänderung ist zu jeder Zeit möglich.

Im folgenden wird die erfindungsgemäße Vorrichtung unter Bezugnahme auf die beigefügten Zeichnungen im einzelnen beschrieben; Es zeigen:
Fig. 1a und 1b die Struktur eines Rundsteuersystems im Prinzip;
Fig. 2 ein Beispiel eines im Rundsteuersystem zu verwendenden Steuerbefehls;
Fig. 3 das Blockdiagramm der erfindungsgemäßen Steuervorrichtung;
Fig. 4 das Schaltbild der erfindungsgemäßen Steuervorrichtung.

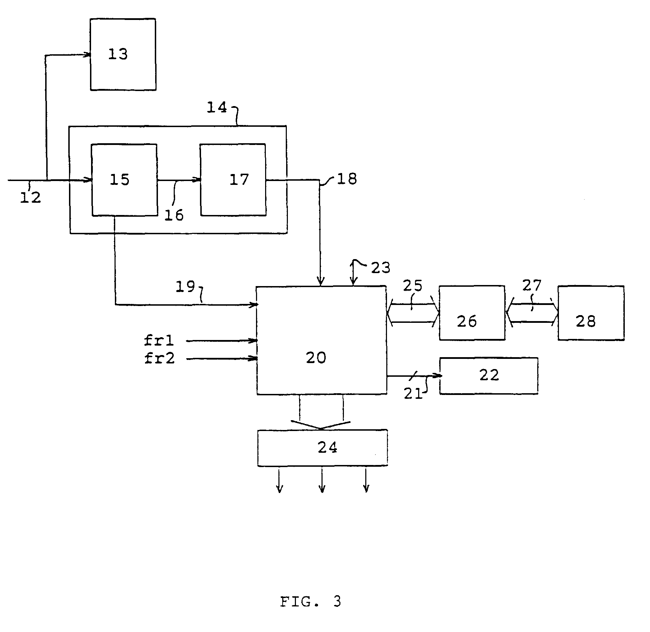

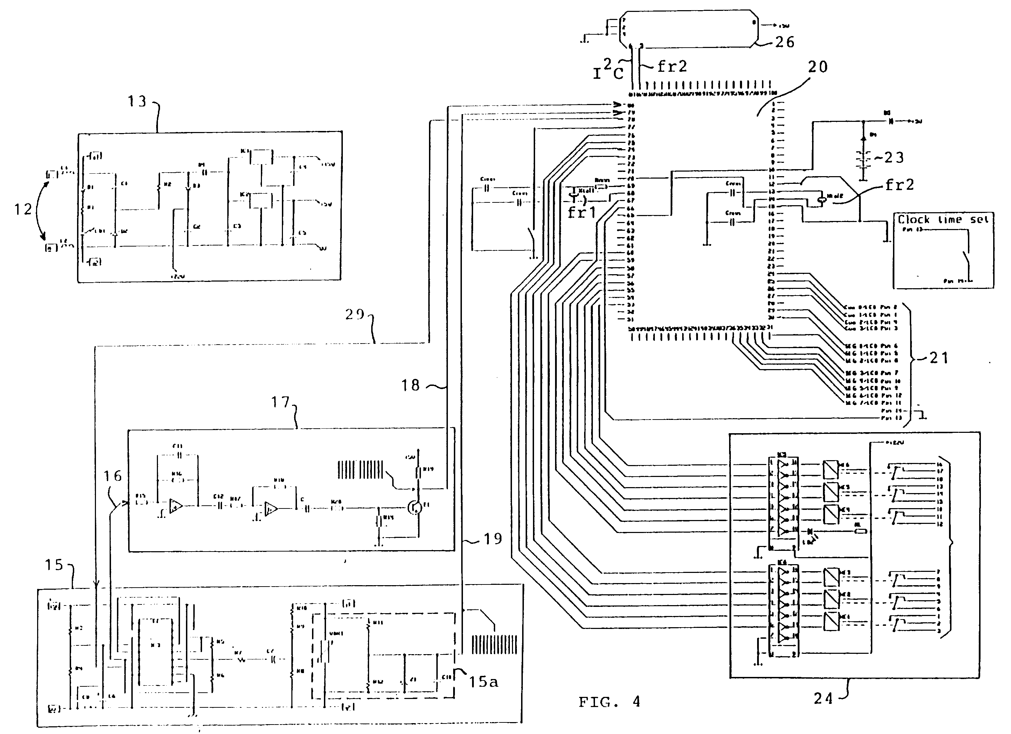

Auf die Figuren 1a, 1b und 2 ist in Verbindung mit der Beschreibung des Standes der Technik verwiesen. Im folgenden wird die Erfindung somit hauptsächlich unter Bezugnahme auf die Figuren 3 und 4 im einzelnen beschrieben.

Figur 3 zeigt das Blockdiagramm der erfindungsgemäßen Steuervorrichtung. Die Vorrichtung umfaßt als zentralen Block den Mikroprozessor 20 und den über den Bus 25 mit diesem verbundenen Speicher 26, der beliebig programmiert werden kann und bevorzugt ein EEPROM-Speicher ist. Die Steuervorrichtung kann an den Computer 28 angeschlossen werden, wobei dann mit einem für die Steuervorrichtung erstellten Programm die gewünschten Funktionen definiert und mit Computer über den Bus 27 in den Speicher 26 eingegeben werden können. Bei Einschalten der Steuervorrichtung prüft der Prozessor 20 den Speicher und bleibt im Wartezustand, falls der Speicher leer ist, oder liest den Speicherinhalt und führt die Funktionen gemäß dem im Speicher befindlichen Programm aus sofern der Speicher Daten enthält. Der Prozessor 20 steuert auf Grund des im Speicher 26 befindlichen Programms den Puffer-Relais-Block 24, die vom Betreiber definierten Ein- und Ausschaltvorgänge zu tätigen, und der Prozessor 20 stellt die Relais auf ihre Ausgangsstellungen, steuert die Schaltverzögerungen der Relais für den Fall von Netzstromunterbrechung und führt andere vom Betreiber definierte Funktionen aus. An die Ausgänge der Steuervorrichtung, das heißt an den Puffer-Relais-Block 24, werden die gewünschten Geräte/Vorrichtungen, wie zum Beispiel kWh-Zähler und Lasten - etwa Heizung, Straßenbeleuchtung u. dgl. - , angeschlossen. Der Puffer-Relais-Block 24 kann je nach Betriebsbedarf ein oder mehrere Relais, bevorzugt sechs Relais enthalten, was für die meisten Einsatzobjekte ausreicht. Der Prozessor 20 erhält als Eingangsgrößen zwei verschiedene Bezugsfrequenzen frl und fr2 und hat eine Uhr, die von der einen, niedrigeren Bezugsfrequenz frl gesteuert wird, und an den Prozessor ist über den Bus 21 das Display 22 angeschlossen, an dem der Betreiber die Uhrzeit oder eine eventuelle andere Information, wie zum Beispiel eine mit der Programmierung verbundene Information oder Fehlermeldungen u.dgl., ablesen kann. Mit Hilfe des Displays 22 kann die Uhr gestellt werden. Die Funktion der Uhr des Prozessors 20 ist durch eine Batterie 23, bevorzugt eine Lithiumbatterie, gegen Stromunterbrechungen gesichert, wobei bei Netzausfall auch der Prozessor zur Verringerung des Stromverbrauchs mit der kleineren Uhrfrequenz frl (z.B. 32 678 Hz) arbeitet, so daß die Ladung der Batterie 23 auch für lange Netzstromunterbrechungen ausreicht. Bei Normalbetrieb, wo die Vorrichtung ihre Betriebsspannung aus dem Netz erhält, arbeitet der Prozessor 20 mit der höheren Uhrfrequenz fr2 (z.B. 8 MHz). Weiter umfaßt die Steuervorrichtung ein Netzanschlußteil 13, das aus der Netzspannung 12 die erforderlichen Betriebsspannungen für die einzelnen Blöcke der Vorrichtung erzeugt.

Weiter umfaßt die erfindungsgemäße Steuervorrichtung einen Filterblock 14, der sich aus dem Filter 15 und dem Signalverarbeitungsblock 17 zusammensetzt. Benötigt wird der Filterblock 14 zum Ausfiltern des mit der Netzspannung eintreffenden Signals höherer Frequenz (Steuerbefehl) aus der Netzfrequenz (50 bzw. 60 Hz) dann, wenn die Steuervorrichtung als Rundsteuerempfänger dient. Das eigentliche Filter 15 ist bevorzugt ein Digital-Bandpaßfilter, dessen Durchlaßfrequenz durch das vom Prozessor 20 kommende Steuersignal bestimmt ist. Die Abhängigkeit der Filter-Durchlaßfrequenz vom Steuersignal des Prozessors kann so verwirklicht werden, dass man die gewünschte Durchlaßfrequenz auf Grund eines Prozessor-Steuersignals von zum Beispiel hundertmal größere Frequenz erhält. Der Prozessor 20 erhält vom Speicher 26 eine Information über die Steuerbefehl-Frequenzen und kann also das Filter 15 so steuern, dass die gewünschten Frequenzen ausgefiltert werden. Das aus der Netzspannung 12 ausgefilterte Steuersignal 16 wird nach erfolgtem Herausfiltern im Signalverarbeitungsblock 17 zu einem Impuls 18 passenden Niveaus für den Prozessor 20 verarbeitet, welcher die Relais gemäß dem Steuerbefehl steuert. In den Prozessor 20 kann außerdem ein zweites Signal 19 eingegeben werden, das im Filter 15 nicht eigentlich herausgefiltert wird, sondern das ein Signal darstellt, dessen Frequenz proportional zur Netzspannungsfrequenz ist, und das zur Überprüfung des Netzspannungspegels dient.

Figur 4 zeigt das detaillierte Schaltbild der Steuervorrichtung, aus dem deren Verwirklichung hervorgeht. Die Quarze, Xtal1 und Xtal2 speisen in den Prozessor 20 die niedrigere Bezugsfrequenz fr1 und die höhere Bezugsfrequenz fr2 ein. Die Uhr des Prozessors 20 wird im Normalzustand über die Diode D5 aus der Betriebsspannung +5V und während eines eventuellen Netzausfalls über die Diode D4 aus der Batterie 23 mit Strom versorgt. In der Figur ist außerdem der Bus 21 eingezeichnet, an den das (nicht dargestellte) Display angeschlossen werden kann. Das Display 22 besteht vorzugsweise aus einer Flüssigkristallanzeige. Die Vorrichtung hat außerdem in Verbindung mit dem Display 22 einen "Clock timeset"-Anschluß zum Einstellen der Uhrzeit. Der Speicher 26 ist über den Bus I²C an den Prozessor angeschlossen, und der Prozessor 20 steuert den Speicher 26 mit Hilfe der Bezugsfrequenz fr2. Der Computer wird zum Eingeben des Programms in den Speicher 26 an diesen angeschlossen (Anschluß in Fig. 4 nicht dargestellt).

Das in Figur 4 dargestellte Netzanschlußteil 13 ist eine auf bekannte Weise verwirklichte Stromquelle, die als Eingänge die Phase L und Null N der Netzspannung hat und aus der Netzspannung für die Vorrichtung die Betriebsspannungen +22V, +15V, +5V und OV erzeugt, wobei die Betriebsspannungen +15V und +5V mit den Reglern IC1 und IC2 erzeugt werden. Die Netzspannung 12 wird außer an das Netzanschlußteil 13 über die Spulen L1 und L2 auch an das Filter 15 gelegt. In der Figur ist dies am Netzanschlußteil 13 durch die Ausgangspole a1 und a2 und am Filter 15 entsprechend durch die Eingangspole a1 und a2 dargestellt.

Der Puffer-Relais-Block 24 umfaßt die Puffer IC5, IC6 für die Relais RE1 bis RE6, an deren Ausgangspole die zu steuernden Zähler und Lasten angeschlossen werden, und die vom Prozessor 20 entweder auf Grund des im Speicher 26 befindlichen Programms oder des vom Rundsteuersender gesendeten Steuerbefehls geschaltet werden.

Das eigentliche Ausfiltern im Filterelement 15 geschieht durch das Digitalfilter IC3, das bevorzugt ein Digital-Bandpass ist. Das Digitalfilter IC3 trennt das zusammen mit der Netzspannung 12 eintreffende Steuersignal höherer Frequenz von der 50 Hz (bzw. 60 Hz) Netzfrequenz. Bevor die Netzspannung 12 an das Digitalfilter IC3 geführt wird, muß ihr Spannungspegel auf einen für das Filter IC3 passenden Wert geändert werden. Dies geschieht mit den Widerständen R8, R9 und R10 oder auf andere an sich bekannte Weise. Das Filter 15 enthält ferner die Komponenten R5, R6, R7 und C7 zum passenden Einstellen des Arbeitspunktes des Filters IC3. An das Digitalfilter IC3 werden die Betriebsspannungen +15V und OV gelegt, und das Filter 15 hat Komponenten R3, R4, C6 und C8 zum Transformieren der Betriebsspannung auf einen für das Filter IC3 passenden Pegel. Die Durchlaßfrequenz des Digitalfilters IC3 ist durch die Frequenz des vom Prozessor 20 kommenden Steuersignals 29 bestimmt. Entsprechend schickt das Filter IC3 als seine Ausgangsgröße 16 an den Signalverarbeitungsblock 17 das aus der Netzspannung ausgefilterte Steuersignal 16. Das Erfinderische am Filter 15 ist, daß es unter Verwendung eines an sich bekannten Digitalfilters IC3 verwirklicht ist. Das Filter des Rundsteuerempfängers wurde früher unter Einsatz von separaten Komponenten oder einer speziell für diesen Zweck geschaffenen integrierten Schaltung verwirklicht. Mit der erfindungsgemäßen Lösung erzielt man ein kostengünstiges Filter mit gutem Qualitätsfaktor (bis zu 90). Die Filter von Rundsteuersendern, die mit separaten Komponenten gemäß dem Stand der Technik verwirklicht sind, bewirken am Durchlaßband eine starke Dämpfung, und das Filter aus einer speziell für diesen Zweck entworfenen integrierten Schaltung wiederum stellt eine kostspielige Lösung dar.

In Figur 4 ist als Teil des Filters 15 der Block 15a dargestellt, der die Netzspannung 12 auf ein für den Prozessor passendes Niveau reduziert, und als Ausgang 19 des Blockes 15a erhält man dann ein Signal 19 von TTL-Niveau, das direkt von der Netzspannungsfrequenz abhängig ist. Auf Grund dieses Signals 19 vermag der Mikroprozessor 20 den Zustand der Netzspannung zu überwachen, das heißt er vermag zu erkennen, ob der Netzspannungspegel in Ordnung ist. Somit hat also der Block 15a nichts mit dem Herausfiltern des Steuersignals aus der Netzspannung zu tun sondern bildet einen separaten Block, auch wenn er in Figur 4 in den Filterblock 15 eingezeichnet ist.

Der Signalverarbeitungsblock 17 umfaßt mit Hilfe zweier Operationsverstärker a und b gebildete Verstärkerstufen, in denen das vom Filter 15 herausgefilterte, Steuerfrequenz aufweisende Signal 16 verstärkt und mit dem Transistor T1 zu einem Signal von TTL-Niveau aufbereitet wird. Dieses Signal 18 wird dem Prozessor 20 zugeleitet, der auf Grund des Informationsgehalts des Signals 18 die dem vom Rundsteuersender gesendeten Steuerbefehl entsprechenden Funktionen ausführt.

In die erfindungsgemäße Vorrichtung können Zeitprogramme, Verzögerungszeiten, Spitzenmeßsteuerungen sowie komplette Jahresprogramme eingegeben werden, nach denen die Vorrichtung die Schaltungen ausführt. Außer als Rundsteuerempfänger und als intelligente automatische Schaltuhr kann die Vorrichtung auch für Uberwachungszwecke eingesetzt werden, was bisher nur mit der Hauptsteueranlage oder dem Rundsteuersender möglich war, die beide um mehrere Größenordnungen teurer sind als die erfindungsgemäße Vorrichtung. Bei Verwendung der erfindungsgemäßen Vorrichtung braucht das Elektrizitätswerk u.U. überhaupt kein Rundsteuersystem anzuschaffen, sondern kann entsprechend programmierte erfindungsgemäße Vorrichtungen als Schaltuhr und Steuervorrichtung zur Steuerung des Stromverbrauchs einsetzen. Elektrizitätswerke, die nicht über ein Rundsteuersystem verfügen, benutzen zur Tarifsteuerung halbautomatische Schaltuhren. Die Schaltuhr arbeitet mit einem einfachen Programm, so daß das Elektrizitätswerk bei Übergang auf Rundsteuersystem bei der Tarifsteuerung statt der Schaltuhr einen Rundsteuerempfänger verwenden muß. Die erfindungsgemäße Vorrichtung kann entweder als solche oder als Rundsteuerempfänger eingesetzt werden, so daß sich mit ihr der Übergang auf Rundsteuersystem einfacher gestaltet.

## Patentansprüche

1. Den Stromverbrauch steuernde Vorrichtung zur Steuerung des Betriebs der über sie ans Stromversorgungsnetz angeschlossenen Last, welche Vorrichtung als Rundsteuerempfänger funktioniert und an die Netzspannung (12) angeschlossene Elemente (15, 17) zum Erkennen des über das Stromversorgungsnetz kommenden, vom Rundsteuersender gesendeten Steuersignals sowie an diese Erkennungselemente angeschlossene Auswertungselemente (20) zur Bewertung des Informationsgehaltes des erkannten Signals und zur auf dieser Bewertung basierenden Laststeuerung durch Betätigung eines Schaltelements (RE1-RE6) umfasst,
dadurch gekennzeichnet,
dass sie außerdem als autonome Schaltuhr funktioniert und eine Echtzeituhr sowie Speicherelemente (26), in die mit einem für die Dauer des Eingebens angeschlossenen Computer (28) Befehle einprogrammiert werden können, sowie mit diesen Speicherelementen und der Echtzeituhr verbundene Auswertungselemente (20) zur Bewertung des Informationsgehalts der Speicherelemente (26) sowie der Echtzeituhr und zur Laststeuerung auf Grund dieser Bewertung durch Betätigung eines Schaltelements (RE1-RE6) umfasst.

2. Vorrichtung nach Anspruch 1, dadurch **gekennzeichnet**, daß die Erkennungselemente (15, 17) ein Filter (15) zum Ausfiltern des Steuersignals aus der Netzspannung sowie einen Signalverarbeitungsblock (17) zum Transformieren des Steuersignals auf ein für die Auswertungselemente (20) passendes Niveau umfassen, und daß das Filter (15) einen an sich bekannten Digitalbandpaß (IC3) umfaßt, dessen Durchlaßfrequenz mit den Auswertungselementen (20) gesteuert wird.

3. Vorrichtung nach Anspruch 2, dadurch **gekennzeichnet**, daß das Steuersignal im Signalverarbeitungsblock (17) in ein Signal von TTL-Niveau umgeformt wird.

4. Vorrichtung nach Anspruch 1, dadurch **gekennzeichnet**, daß in den Speicher (26) Befehle zur Steuerung der Schaltelemente (RE1-RE6) zu gewünschten Zeitpunkten während eines Jahres einprogrammiert werden können.

5. Vorrichtung nach Anspruch 1, dadurch **gekennzeichnet,** daß das Auswertungselement (20) ein Mikroprozessor ist.

6. Vorrichtung nach Anspruch 1, dadurch **gekennzeichnet,** daß das Speicherelement (26) ein EEPROM-Speicher ist.

7. Vorrichtung nach Anspruch 1, dadurch **gekennzeichnet,** daß das Schaltelement (RE1-RE6) ein Relais ist.

8. Vorrichtung nach Anspruch 1, dadurch **gekennzeichnet,** daß wenigstens ein Schaltelement (RE1-RE6) vorhanden ist.

9. Vorrichtung nach Anspruch 1, dadurch **gekennzeichnet,** daß sie ein ans Stromversorgungsnetz angeschlossenes Netzanschlußteil (13) umfaßt, das die Betriebsspannungen (+22V, +15V, +5V, 0V) für die Vorrichtung erzeugt.

10. Vorrichtung nach Anspruch 5, dadurch **gekennzeichnet,** daß sie zwei die Uhrfrequenz erzeugende Elemente (Xtal1, Xtal2) umfaßt, wobei die Uhr ständig die eine, niedrigere Frequenz (fr1) und der Mikroprozessor bei anliegenden Netzspannungen die andere, höhere Uhrfrequenz (fr2), bei Netzspannungsausfall jedoch die niedrigere Uhrfrequenz (fr1) benutzt.

11. Vorrichtung nach Anspruch 1, dadurch **gekennzeichnet,** daß sie eine Batterie (23) hat, aus der sie bei Netzspannungsausfall gespeist wird.

12. Vorrichtung nach Anspruch 1, dadurch **gekennzeichnet,** daß sie Elemente (15a) aufweist, die an die Netzspannung (12) angeschlossen sind und für die Auswertungselemente (20) ein zur Netzfrequenz proportionales Signal (19) erzeugen.

13. Vorrichtung nach Anspruch 1, dadurch **gekennzeichnet,** daß sie eine Anzeigeeinrichtung (22) zum Anzeigen der Uhrzeit hat.

## Claims

1. A device controlling the current consumption for the control of the operation of the load connected over it to the supply system, device which functions as a ripple control receiver and which comprises elements (15, 17) connected to the supply voltage (12) for the recognition of the control signal coming over the supply system and sent by the ripple control sender as well as evaluation elements (20) connected to these recognition elements for the evaluation of the information content of the recognized signal and for the load control based on this evaluation by actuation of a circuit element (RE1-RE6),
characterized in that
it functions moreover as an autonomous switch clock and it comprises a real-time clock as well as storage elements (26) into which commands can be programmed with a computer (28) connected for the duration of the input, as well as evaluation elements (20) connected to these storage elements and to the real-time clock for the evaluation of the information content of the storage elements (26) as well as of the real-time clock and for the load control on the base of this evaluation by actuation of a circuit element (RE1-RE6).

2. A device according to claim 1, characterized in that the recognition elements (15, 17) comprise a filter (15) to filter out the control signal from the supply voltage as well as a signal processing block (17) to transform the control signal to a level appropriate for the evaluation elements (20) and that the filter (15) comprises a digital band-pass (IC3) known as such, the transmission frequency of which is controlled with the evaluation elements (20).

3. A device according to claim 2, characterized in that the control signal is converted in the signal processing block (17) into a signal of TTL-level.

4. A device according to claim 1, characterized in that commands for the control of the circuit elements (RE1-RE6) can be programmed into the memory (26) at desired moments during a year.

5. A device according to claim 1, characterized in that the evaluation element (20) is a microprocessor.

6. A device according to claim 1, characterized in that the storage element is an EEPROM memory.

7. A device according to claim 1, characterized in that the circuit element (RE1-RE6) is a relay.

8. A device according to claim 1, characterized in that there is at least one circuit element (RE1-RE6).

9. A device according to claim 1, characterized in that it comprises a mains connection part (13), connected to the supply system, which generates the operating voltages (+22V, +15V, +5C, OV) for the device.

10. A device according to claim 5, characterized in that it comprises two elements (Xta11, Xta12) which generate the clock frequency, whereby the clock continuously uses the one frequency, the lower one (fr1) and the microprocessor uses, for connected voltages, the other clock frequency, the higher one (fr2), however by voltage losses the lower clock frequency (fr1).

11. A device according to claim 1, characterized in that it has a battery (23) from which it is fed by voltage losses.

12. A device according to claim 1, characterized in that it has elements (15a) which are connected to the supply voltage (12) and generate, for the evaluation elements (20), a signal (19) proportionate to the supply frequency.

13. A device according to claim 1, characterized in that it has a display device (22) to display the time.

## Revendications

1. Dispositif de gestion de la consommation de courant pour la commande de l'exploitation de la charge raccordée au réseau d'alimentation en courant, lequel dispositif fonctionne comme un récepteur de télécommande centralisée et qui comprend des éléments (15, 17) raccordés à la tension du secteur (12) pour reconnaître le signal de commande émis par l'émetteur de télécommande centralisée, venant par l'intermédiaire du réseau d'alimentation en courant, ainsi que des éléments d'évaluation (20) raccordés à ces éléments de reconnaissance pour évaluer le contenu de l'information du signal reconnu et pour la commande de la charge se basant sur cette évaluation par actionnement d'un élément de commutation (RE1-RE6),
caractérisé en ce
qu'il fonctionne en outre comme un interrupteur horaire autonome et comprend une horloge en temps réel ainsi que des éléments de mémoire (26) dans lesquels des ordres peuvent être programmés avec un ordinateur (28) branché pour la durée de l'entrée ainsi que des éléments d'évaluation (20) reliés à ces éléments de mémoire et à l'horloge en temps réel pour évaluer le contenu de l'information des éléments de mémoire (26) ainsi que de l'horloge en temps réel et pour la commande de la charge sur la base de cette évaluation par actionnement d'un élément de commutation (RE1-RE6).

2. Dispositif selon la revendication 1, caractérisé en ce que les éléments de reconnaissance (15, 17) comprennent un filtre (15) pour filtrer le signal de commande de la tension du secteur ainsi qu'un bloc de traitement de signal (17) pour transformer le signal de commande à un niveau convenant aux éléments d'évaluation (20) et que le filtre (15) comprend un passe-bande numérique connu en soi (IC3) dont la fréquence de transmission est commandée avec les éléments d'évaluation (20).

3. Dispositif selon la revendication 2, caractérisé en ce que le signal de commande est transformé dans le bloc de traitement de signal (17) en un signal de niveau TTL.

4. Dispositif selon la revendication 1, caractérisé en ce que des ordres pour la commande des éléments de commutation (RE1-RE6) peuvent être programmés dans la mémoire (26) à des moments souhaités pendant une année.

5. Dispositif selon la revendication 1, caractérisé en ce que l'élément d'évaluation (20) est un microprocesseur.

6. Dispositif selon la revendication 1, caractérisé en ce que l'élément de mémoire (26) est une mémoire EEPROM.

7. Dispositif selon la revendication 1, caractérisé en ce que l'élément de commutation (RE1-RE6) est un relais.

8. Dispositif selon la revendication 1, caractérisé en ce qu'il existe au moins un élément de commutation (RE1-RE6).

9. Dispositif selon la revendication 1, caractérisé en ce qu'il comprend une partie de branchement au réseau (13), branchée au réseau d'alimentation en courant, partie qui génère les tensions de service (+22V, +15V. +5V, 0V) pour le dispositif.

10. Dispositif selon la revendication 5, caractérisé en ce qu'il comprend deux éléments (Xta11, Xta12) qui génèrent la fréquence de l'horloge, l'horloge utilisant constamment l'une des fréquences, la plus basse (fr1) et le microprocesseur, pour des tensions de secteur branchées, utilisant l'autre fréquence d'horloge, la plus élevée (fr2), mais utilisant toutefois, lors d'une panne de secteur, la fréquence d'horloge la plus basse (fr1).

11. Dispositif selon la revendication 1, caractérisé en ce qu'il a une batterie (23) à partir de laquelle il est alimenté en cas de panne de secteur.

12. Dispositif selon la revendication 1, caractérisé en ce qu'il présente des éléments (15a) qui sont branchés à la tension du secteur (12) et qui génèrent, pour les éléments d'évaluation (20), un signal proportionnel à la fréquence du secteur (19).

13. Dispositif selon la revendication 1, caractérisé en ce qu'il a un dispositif d'affichage (22) pour afficher l'heure.
